# EUROPÄISCHE PATENTANMELDUNG

(11) **EP 3 579 370 A1**
(43) Veröffentlichungstag der Anmeldung: **11.12.2019**
(21) Anmeldenummer: 18176030.7
(22) Anmeldetag: 05.06.2018
(51) Int. Cl.: H02J 3/38, F03D 7/04, H02P 9/00, H03L 7/14

(54) **VERFAHREN ZUM BETRIEB EINER WINDENERGIEANLAGE**

(71) Anmelder: Nordex Energy GmbH, 22419 Hamburg (DE)
(72) Erfinder: Hoffmann, Nils, 06114 Halle / Saale (DE); Wessels, Christian, 20357 Hamburg (DE)
(74) Vertreter: Hauck Patentanwaltspartnerschaft mbB

(57) **Zusammenfassung**

Verfahren zum Betrieb einer Windenergieanlage, die über einen Umrichter in ein elektrisches Übertragungsnetz elektrische Leistung synchronisiert zu einer Netzspannung einspeist, wobei das Verfahren folgende Schritte aufweist:- Messen eines Phasenwinkels (φ Line) in dem elektrischen Übertragungsnetz,- Bestimmen eines geregelten Phasenwinkels (φ PLL) mittels einer Phasenregelschleife (PLL), an der der gemessene Phasenwinkel (φ Line) aus dem elektrischen Übertragungsnetz anliegt,- Speichern des zuletzt bestimmten geregelten Phasenwinkels (φ PLL) in einem Ringspeicher (80), der eine Anzahl von zyklisch beschreibbaren Speicherplätzen besitzt,- Ansteuern des Umrichters mit dem geregelten Phasenwinkel (φ PLL) und- Zuschalten des Ringspeichers(80) in einem Fall eines vorbestimmten Netzfehlers, wobei mit dem zugeschalteten Ringspeicher (80) gespeicherte Werte für den geregelten Phasenwinkel statt der bestimmten geregelten Phasenwinkel der Phasenregelschleife an den Umrichter angelegt werden.

## Beschreibung

Die vorliegende Erfindung betrifft ein Verfahren zum Betrieb einer Windenergieanlage, die über einen Umrichter in ein elektrisches Übertragungsnetz elektrische Leistung synchronisiert zu einer Netzspannung einspeist.

Die Erfindung betrifft allgemein das Gebiet zur Regelung eines Umrichtersystems einer Windenergieanlage, insbesondere die Regelung eines Teilumrichters für einen doppelt gespeisten Asynchrongenerator. Für den Betrieb der Windenergieanlage ist die Regelung des Umrichters bei Vorliegen eines Netzfehlers eine besondere technische Herausforderung.

Aus EP 1 914 877 A2 ist ein Verfahren und eine Vorrichtung zum Betrieb einer elektrischen Maschine bekannt geworden. Die elektrische Maschine, hierbei kann es sich um eine Windenergieanlage handeln, ist dazu ausgelegt, elektrisch mit dem elektrischen Übertragungsnetz verbunden zu werden. Eine Steuerung ist für die elektrische Maschine vorgesehen, damit diese elektrisch mit dem Übertragungsnetz während und nach einem Spannungseinbruch für eine unbestimmte Zeitdauer verbunden bleibt. Insbesondere ist bekannt geworden, bei einem Abfall der Spannung auf nahezu Null Volt, *zero voltage ride through* (ZVRT), eine Phasenregelschleife vorzusehen, die einen Phasendetektor und mindestens einen proportional-integral (PI)-Filter aufweist. Ferner ist vorgesehen, dass die Parameter des PI-Filters in Abhängigkeit von netzspannungsabhängig definierten Zuständen diskret ausgewählt werden können, wobei hierzu auf eine Zustandsmaschine zurückgegriffen wird.

Aus US 6,941,113 B2 ist bekannt, eine Windenergieanlage mit einem doppelt gespeisten Asynchrongenerator über eine Phasenregelschleife zu regeln. Bei bestimmten Ereignissen im Netz und/oder in der Windenergieanlage kann es passieren, dass die Phasenregelschleife zeitweise nicht synchron mit der Netzspannung ist. Bekannte Windenergieanlagen erlauben der Phasenregelschleife in diesem Fall, das Ereignis zu durchfahren und erst zu einem späteren Zeitpunkt wieder synchron mit der Netzspannung einzuspeisen. Damit die Phasenregelschleife schnell wieder synchronisiert werden kann, wird eine Phasenwinkelabweichung ermittelt und bei Überschreiten eines Mindestwerts aus dieser ein Skalierungsfaktor berechnet, der auf die Sollwerte der einzuspeisenden Ströme angewendet wird.

Der Erfindung liegt die Aufgabe zugrunde, ein Verfahren zum Betrieb einer Windenergieanlage bereitzustellen, das mit einfachen Mitteln auch bei Netzfehlern eine zuverlässige Ansteuerung des Phasenwinkels erlaubt.

Erfindungsgemäß wird die Aufgabe durch das Verfahren mit den Merkmalen aus Anspruch 1 gelöst. Vorteilhafte Ausgestaltungen bilden die Gegenstände der Unteransprüche.

Das erfindungsgemäße Verfahren ist vorgesehen und bestimmt zum Betrieb einer Windenergieanlage, die über einen Umrichter in ein elektrisches Übertragungsnetz elektrische Leistung synchronisiert zu einer Netzspannung einspeist. Beispielsweise kann dies eine mit einem doppelt gespeisten Asynchrongenerator ausgestattete Windenergieanlage sein, die über einen Teilumrichter einspeist. Das erfindungsgemäße Verfahren greift auf einen gemessenen Phasenwinkel des elektrischen Übertragungsnetzes zurück. Der gemessene Phasenwinkel liegt zur Bestimmung eines geregelten Phasenwinkels an einer Phasenregelschleife, kurz PLL, an, wobei PLL für "phase locked loop" steht. Die PLL bestimmt einen geregelten Phasenwinkel, mit dem der Umrichter angesteuert wird. Der zuletzt bestimmte geregelte Phasenwinkel wird zyklisch in einem Ringspeicher gespeichert, der eine Anzahl von zyklisch beschreibbaren Speicherplätzen besitzt.

Erfindungsgemäß ist vorgesehen, dass in einem Fall eines vorbestimmten Netzfehlers der Ringspeicher zugeschaltet wird. Mit dem zugeschalteten Ringspeicher wird an den Umrichter wenigstens ein gespeicherter Wert für den geregelten Phasenwinkel statt eines aus einem aktuellen Messwert für den Phasenwinkel bestimmten geregelten Phasenwinkel aus der Phasenregelschleife angelegt. Im Fall des vorbestimmten Netzfehlers wird für die Ansteuerung des Umrichters nicht länger auf den aktuellen geregelten Phasenwinkel der Phasenregelschleife zurückgegriffen, sondern in dem Ringspeicher gespeicherte Werte für den geregelten Phasenwinkel werden an den Umrichter angelegt.

Die Erfindung ermöglicht damit ohne eine Trennung vom Netz ein Durchfahren von Netzspannungsfehlern, *fault ride through* (FRT), insbesondere von tiefen Netzspannungsfehlern, *low voltage ride through* (LVRT), ohne dabei die Regelungsdynamik der PLL im Nennbetrieb der Windenergieanlage negativ zu beeinflussen. Ist beispielsweise für den Normalbetrieb der Windenergieanlage ein Regelungsziel, mit einer hohen Dynamik die Leistungseinspeisung der Windenergieanlage an Netzfrequenzschwankungen anzupassen, so wird dieses Regelungsziel nicht dadurch eingeschränkt, dass im Falle eines Netzfehlers auf gespeicherte Phasenwinkel zurückgegriffen wird. Es wird also ein träges Detektionsverhalten bei Auftreten des Netzspannungsfehlers erzielt, der dazu beiträgt, die Netzfrequenz im Fehlerfall nahezu konstant zu halten.

Das erfindungsgemäße Verfahren ist bevorzugt weiter dadurch gekennzeichnet, dass der zugeschaltete Ringspeicher während des Vorliegens eines vorbestimmten Netzfehlers nicht weiter beschrieben wird. Dies führt dazu, dass die von der Phasenregelschleife nach und während des Netzfehlers bestimmten geregelten Phasenwinkel nicht in dem Ringspeicher gespeichert werden.

In bevorzugten Ausgestaltungen ist für den zugeschalteten Ringspeicher zwischen zwei Varianten zu unterscheiden. Bei einer ersten Variante werden im Fall des vorbestimmten Netzfehlers die zuletzt gespeicherten Werte des Ringspeichers nacheinander an den Umrichter angelegt. In einer alternativen Ausgestaltung kann im Falle des vorbestimmten Netzfehlers ein Mittelwert der zuletzt gespeicherten Werte gebildet und an den Umrichter angelegt werden.

In einer bevorzugten Ausgestaltung umfasst der vorbestimmte Netzfehler einen Spannungseinbruch, bei dem die Spannung auf einen Minimalwert von 15 % der Nennspannung oder weniger fällt, bevorzugt auf einen Wert von 10 % der Nennspannung oder weniger. Im Falle eines solchen Netzfehlers, der auch ein Absinken der Spannung auf Null Volt oder annähernd Null Volt mit einschließt, *zero voltage ride through* (ZVRT), wird der Ringspeicher zugeschaltet und legt die Werte für den geregelten Phasenwinkel an dem Umrichter an.

In einer Weiterbildung des Verfahrens umfasst der vorbestimmte Netzfehler einen Spannungseinbruch, bei dem die Spannung auf einen Minimalwert von 15 % der Nennspannung oder weniger für eine vorbestimmte Zeitdauer abfällt. Auslösend für das Zuschalten des Ringspeichers ist hierbei, dass ein Spannungseinbruch für eine vorbestimmte Zeitdauer anhält. Kurzfristige Spannungseinbrüche führen dann nicht zu einem Zuschalten des Ringspeichers.

Der vorbestimmte Netzfehler umfasst ferner auch eine Situation, in der kein Phasenwinkel im elektrischen Übertragungsnetz gemessen werden kann. Dies schließt insbesondere den Fall mit ein, dass eine oder mehrere Phasen des elektrischen Übertragungsnetzes eine Spannung von Null Volt oder annähernd Null Volt aufweisen. Für den regulären Betrieb ist die Phasenregelschleife ausgelegt, mit dem geregelten Phasenwinkel dem gemessenen Phasenwinkel im elektrischen Übertragungsnetz zu folgen. Dies kann insbesondere sehr dynamisch erfolgen.

Bevorzugt erfolgt eine Klärung des vorbestimmten Netzfehlers, wenn die Spannung einen vorbestimmten Mindestwert wieder überschreitet. Bevorzugt ist eine Hysterese vorgesehen, so dass der vorbestimmte Mindestwert für die Netzspannung, bei dem eine Klärung des Netzfehlers erkannt wird, deutlich höher als der Minimalwert ist, bei dem das Vorliegen eines Netzfehlers erkannt wird.

Grundsätzlich ist für die vorliegende Erfindung der Aufbau der Phasenregelschleife beliebig. Besonders vorteilhaft ist es, einen proportionalen Schleifenfilter mit einer Proportionalitätskonstanten Kₚ vorzusehen. Bevorzugt weist die Phasenregelschleife auch eine Vorsteuerung der Netzfrequenz auf, die einen Tiefpassfilter mit einer Zeitkonstanten T₁ aufweist.

Die Erfindung wird nachfolgend an einem Beispiel näher erläutert. Es zeigen:
- Fig. 1: eine Windenergieanlage in einer schematischen Ansicht,
- Fig. 2: einen Windpark, in dem eine Windenergieanlage beispielhaft in ihrem elektrischen Schaltungsaufbau dargestellt ist,
- Fig. 3: der Wechsel zwischen regulärem Betrieb und einem vorbestimmten Netzfehler und
- Fig. 4: die PLL mit einem Ringspeicher zur Bestimmung des Phasenwinkels bei einem Spannungseinbruch.

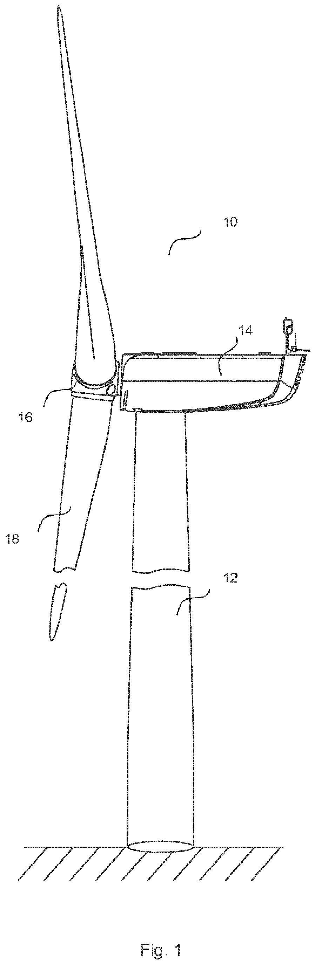

Figur 1 zeigt eine Windenergieanlage 10 mit einem Turm 12 und einem darauf angeordneten Maschinenhaus 14. Das Maschinenhaus 14 weist einen Antriebsstrang auf (nicht gezeigt), der mit einen Rotor 16 zur Übertragung einer Rotationsbewegung verbunden ist. Der Rotor weist ein oder mehrere Rotorblätter 18 auf.

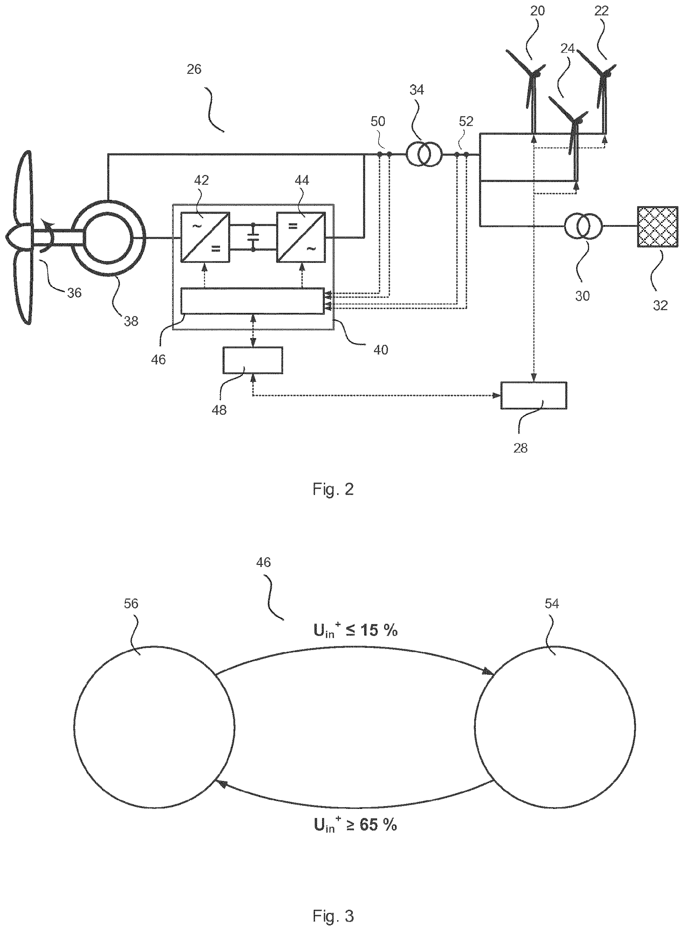

Figur 2 zeigt einen Windpark mit einer Vielzahl von Windenergieanlagen 20, 22, 24, 26, die von einem Windparkregler 28 gesteuert werden. Die Windparkregler 28 ist dabei zu einem bidirektionalen Datenaustausch mit den Windenergieanlagen 20 bis 26 ausgebildet. Die Windenergieanlagen 20 bis 26 speisen in ein 3-phasiges Parknetz ein, das über einen gemeinsamen Netzverknüpfungspunkt 30 in ein 3-phasiges elektrisches Übertragungsnetz 32 einspeist. In Figur 3 ist zur Vereinfachung eine 1-phasige Darstellung gewählt. Je nach Ausgestaltung können die einzelnen Windenergieanlagen 20 bis 26 jeweils mit dem Parknetz über einen Mittelspannungstransformator verbunden sein (beispielhaft dargestellt für die Windenergieanlage 26).

Für die Windenergieanlage 26 ist die Verschaltung für eine doppelt gespeiste Asynchronmaschine schematisch dargestellt. Der Rotor 36 ist eingerichtet, eine Rotationsbewegung auf den Rotor der Asynchronmaschine 38 zu übertragen. Der Rotorkreis der Asynchronmaschine 38 ist über ein Umrichtersystem 40 mit dem Transformator 34 und dem Parknetz verbunden. Der Statorkreis der Asynchronmaschine 38 ist direkt mit dem Transformator 34 und dem Parknetz verbunden. Das Umrichtersystem 40 besitzt einen rotorseitigen Umrichter 42 und einen netzseitigen Umrichter 44, die über einen Gleichstromzwischenkreis miteinander verbunden sind. Gesteuert werden die Umrichter 42 und 44 über einen Umrichterregler 46. Der Umrichter 44 ist eingerichtet, die Felderregung und damit die Drehzahl und Leistungsabgabe des Generators 38 zu regeln.

Die gesamte Windenergieanlage 26 wird über einen Windenergieanlagenregler 48 gesteuert, die Steuerungsdaten bidirektional mit dem Windparkregler 28 austauscht.

Der Windenergieanlagenregler 48 ist eingerichtet Steuerungsdaten bidirektional mit dem Umrichterregler 46 auszutauschen und diesem beispielsweise Sollwerte für die Wirk- und/oder Blindleistungseinspeisung des Generator/Umrichter-Systems bereitzustellen.

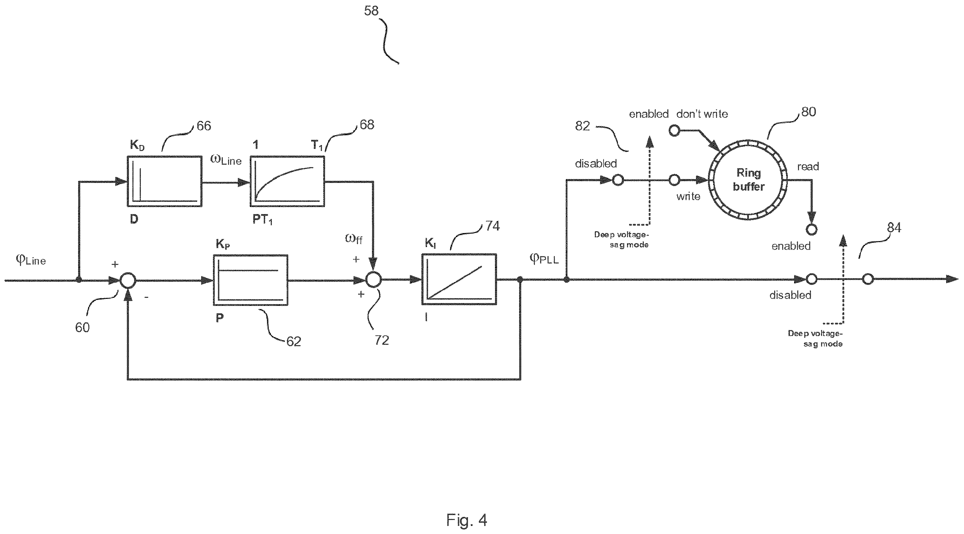

An dem Umrichterregler 46 liegt als Eingangsgröße für die Regelung der rotor- und netzseitig einzuprägenden Ströme ein gemessener beziehungsweise aus direkten Messgrößen bestimmter Phasenwinkel ϕₗᵢₙₑ an. Der Umrichterregler 46 empfängt als Eingangsgröße weiterhin den Istwert der Netzspannung auf allen 3 Phasen oder eine damit verkettete Größe. Bevorzugt empfängt der Umrichterregler 46 als Eingangsgröße den Istwert der Mitsystemspannung (Positive Sequence Voltage), welcher in bekannter Weise durch eine mathematische Transformation aus den Istwerten der Spannung auf den 3 Phasen ermittelt wird. Der Umrichterregler kann die Mitsystemspannung auch aus bereitgestellten Messgrößen berechnen. In Figur 2 kann die Netzspannung und der Phasenwinkel entweder anlagenseitig von dem Transformator 34 mittels einer Messvorrichtung 50 oder netzseitig des Transformators 34 mittels einer Messvorrichtung 52 gemessen bzw. ermittelt werden. Die Messvorrichtungen können eingerichtet sein, die Mitsystemspannung zu ermitteln oder die dafür notwendigen Messwerte dem Umrichterregler bereitzustellen. Die Verarbeitung des gemessenen Phasenwinkels wird nachfolgend im Zusammenhang mit Figur 4 beschrieben. Die Spannungen an den beiden anlagennahen Messpunkten sind für das Erkennen eines Netzfehlers ausreichend, wenngleich die Spannungen bzw. die Restspannungen auf den einzelnen Phasen in der Nähe der Windenergieanlage bei einem Netzkurzschluss in Abhängigkeit von den Impedanzen der eingesetzten Übertragungseinrichtungen (Transformatoren 30, 34) sowie in Abhängigkeit von der durch die Windenergieanlage auf den einzelnen Phasen eingespeisten Blindleistung deutlich von den Spannungen auf den einzelnen Phasen am Netzverknüpfungspunkt abweichen können. An der Windenergieanlage erfasste Spannungsmesswerte werden im Rahmen der Beschreibung als Messwerte für die Netzspannung angesehen.

Gemäß Figur 3 kennt der Umrichterregler 46 zwei Zustände im Zusammenhang mit der Ansteuerung des Umrichtersystems, zwischen denen beispielsweise mittels einer Zustandsmaschine in Abhängigkeit von der Netzspannung umgeschaltet wird. In einer Zustandsdarstellung kann der Umrichterregler 46 den Zustand 54 eines Netzfehlers und den Zustand des regulären Betriebs 56 einnehmen. Der Umrichterregler 46 wechselt, wenn die Spannung U⁺ᵢₙ<15% der Nennspannung (an dem gewählten Messpunkt) ist, aus dem regulären Betrieb 56 in den Betriebszustand eines Netzfehlers 54. Ist die Spannung U⁺ᵢₙ>=65%, so wird der Netzfehler 54 geklärt und die Windenergieanlage kehrt in den regulären Betriebszustand 56 zurück. Da die Grenzwerte für das Umschalten in den Fehlerbetrieb (FRT) und das Zurückschalten in den Normalbetrieb verschieden vorgegeben sind, liegt eine Hystereseregelung vor. Ergänzend kann als Umschaltbedingung für beide Schaltvorgänge eine Zeitbedingung vorgesehen sein, so dass die Spannung für einen vorgegebene Zeit, z.B. einige Millisekunden bis einige zehn Millisekunden, unter bzw. über dem jeweiligen Grenzwert festgestellt sein muss, bevor ein Schaltvorgang erfolgen kann.

Figur 4 zeigt ein beispielhaftes Schema einer Phasenregelschleife (PLL) 58, die abhängig von einer anliegenden Mitsystemspannung die Ausgangsphase ϕ_{PLL} angibt. Hierzu im Einzelnen:
Der gemessene Phasenwinkel ϕₗᵢₙₑ liegt zusammen mit dem geregelten Phasenwinkel ϕ_{PLL} an einem Subtraktionsglied 60 an. Das Subtraktionsglied 60 ermittelt eine Differenz zwischen dem gemessenen Phasenwinkel ϕₗᵢₙₑ und dem geregelten Phasenwinkel ϕ_{PLL}. Die in dem Subtraktionsglied 60 gebildete Differenz liegt als Eingangsgröße an einem P-Glied 62 (Proportionalglied) an, welches eingerichtet ist, über Multiplikation der Phasenwinkeldifferenz mit einer Übertragungskonstanten K_{P} eine Kreisfrequenz zu ermitteln.

Der gemessene Phasenwinkel ϕ_{Line} liegt in einem parallel geschalteten Vorsteuerzweig an einem D-Glied 66 (Differentialglied) an, welches eingerichtet ist, unter Verwendung einer Übertragungskonstante K_{D} und dem gemessene Phasenwinkel ϕ_{Line} eine Kreisfrequenz ω_{Line} zu ermitteln. Die ermittelte Kreisfrequenz ω_{Line} liegt als Eingangsgröße an einem PT1-Glied 68 (Verzögerungsglied 1. Ordnung) an, welches eingerichtet ist, unter Verwendung einer Übertragungskonstante K=1 und einer Zeitkonstante T1 eine Kreisfrequenz ω_{ff} zu ermitteln.

Die in dem Vorsteuerzweig gebildete Kreisfrequenz ω_{ff} liegt zusammen mit der von dem P-Glied 62 gebildeten Kreisfrequenz an einem Additionsglied 72 an. Die durch das Additionsglied gebildete Summenkreisfrequenz liegt als Eingangsgröße an einem I-Glied 74 (Integrationsglied) an, welches die Summenkreisfrequenz unter Verwendung einer Übertragungskonstante K_{I} zu dem geregelten Phasenwinkel ϕ_{PLL} integriert, der in einer Regelschleife an das Subtraktionsglied 60 zurückgeführt wird.

Der geregelte Phasenwinkel ϕ_{PLL} liegt an einer Schaltlogik bestehend aus einem Ringspeicher 80 und Schaltern 82 und 84 an. Im regulären Betrieb ist der Schalter 84 so geschaltet, dass am Ausgang der Regelschleife der an der Schaltlogik anliegende geregelte Phasenwinkel ϕ_{PLL} ausgegeben wird. Weiterhin liegt der geregelte Phasenwinkel ϕ_{PLL} im regulären Betrieb an dem Ringspeicher 80 an und wird zyklisch in diesem gespeichert, so dass beispielsweise für einen Takt von 1 Millisekunde die zuletzt bestimmten Werte für geregelte Phasenwinkel ϕ_{PLL} für die vergangenen 20 Millisekunden vorliegen. Bei Auftreten eines Netzfehlers wird der Ringspeicher 80 ausgelesen und ein in diesem gespeicherter Wert oder ein Mittelwert aus den in dem Ringspeicher 80 gespeicherten Werten für den geregelten Phasenwinkel ϕ_{PLL} am Ausgang der Regelschleife der Schaltlogik für die Regelung des Umrichters ausgegeben. Das Umschalten zwischen den beiden Betriebszuständen erfolgt beispielsweise über eine Zustandsmaschine des Umrichterreglers, die auf die Schalter 82 und 84 wirkt. Bei einem Netzfehler werden durch Umschalten des Schalters 82 eingangsseitig an dem Ringspeicher 80 anliegende Werte für den geregelten Phasenwinkel ϕ_{PLL} nicht mehr in dem Ringspeicher gespeichert.

## Patentansprüche

1. Verfahren zum Betrieb einer Windenergieanlage, die über einen Umrichter in ein elektrisches Übertragungsnetz elektrische Leistung synchronisiert zu einer Netzspannung einspeist, wobei das Verfahren folgende Schritte aufweist:
- Messen eines Phasenwinkels in dem elektrischen Übertragungsnetz,
- Bestimmen eines geregelten Phasenwinkels mittels einer Phasenregelschleife (PLL), an der der gemessene Phasenwinkel aus dem elektrischen Übertragungsnetz anliegt,
- Speichern des zuletzt bestimmten geregelten Phasenwinkels in einem Ringspeicher, der eine Anzahl von zyklisch beschreibbaren Speicherplätzen besitzt,
- Ansteuern des Umrichters mit dem geregelten Phasenwinkel und
- Zuschalten des Ringspeichers in einem Fall eines vorbestimmten Netzfehlers, wobei mit dem zugeschalteten Ringspeicher gespeicherte Werte für den geregelten Phasenwinkel statt der bestimmten geregelten Phasenwinkel der Phasenregelschleife an den Umrichter angelegt werden.

2. Verfahren nach Anspruch 1, **dadurch gekennzeichnet, dass** der Ringspeicher nach dem Zuschalten nicht weiter beschrieben wird.

3. Verfahren nach Anspruch 1 oder 2, **dadurch gekennzeichnet, dass** der Ringspeicher im Falle des vorbestimmten Netzfehlers seine zuletzt gespeicherten Werte nacheinander an den Umrichter anlegt.

4. Verfahren nach Anspruch 1 oder 2, **dadurch gekennzeichnet, dass** der Ringspeicher im Falle des vorbestimmten Netzfehlers einen Mittelwert seiner zuletzt gespeicherten Werte an den Umrichter anlegt.

5. Verfahren nach einem der Ansprüche 1 bis 4, **dadurch gekennzeichnet, dass** der vorbestimmte Netzfehler einen Spannungseinbruch umfasst, bei dem die Spannung auf einen Wert von 15 % der Nennspannung oder weniger abfällt.

6. Verfahren nach einem der Ansprüche 1 bis 5, **dadurch gekennzeichnet, dass** der vorbestimmte Netzfehler einen Spannungseinbruch umfasst, bei dem die Spannung auf einen Wert von 15 % der Nennspannung oder weniger für eine vorbestimmte Zeitdauer abfällt.

7. Verfahren nach einem der Ansprüche 1 bis 6, **dadurch gekennzeichnet, dass** der vorbestimmte Netzfehler einen Spannungseinbruch umfasst, bei dem kein Phasenwinkel im elektrischen Übertragungsnetz gemessen werden kann.

8. Verfahren nach einem der Ansprüche 1 bis 7, **dadurch gekennzeichnet, dass** die Phasenregelschleife dafür ausgelegt ist, mit dem geregelten Phasenwinkel dem gemessenen Phasenwinkel im elektrischen Übertragungsnetz zu folgen.

9. Verfahren nach einem der vorangehenden Ansprüche, **dadurch gekennzeichnet, dass** eine Klärung der des vorbestimmten Netzfehlers erfolgt, wenn die die Spannung einen Wert von 65 % der Nennspannung oder mehr übersteigt.
